# EUROPEAN PATENT SPECIFICATION

(11) **EP 3 879 866 B1**
(45) Date of publication and mention of the grant of the patent: **10.08.2022**
(21) Application number: 20162235.4
(22) Date of filing: 10.03.2020
(51) Int. Cl.: H04W 12/00, H04W 12/06, H04W 12/69

(54) **METHOD FOR ESTABLISHING A SECURE CONNECTION FOR THE INTERNET OF THINGS**
VERFAHREN ZUR HERSTELLUNG EINER SICHEREN VERBINDUNG FÜR DAS INTERNET DER DINGE
PROCÉDÉ POUR ÉTABLIR UNE CONNEXION SÉCURISÉE POUR L'INTERNET DES OBJETS

(43) Date of publication of application: 15.09.2021
(73) Proprietor: Athonet S.R.L., 34149 Trieste (IT)
(72) Inventor: SOLIMAN, Hesham, South Melbourne VIC - Victoria (AU); VERIN, Gianluca, I-34149 Trieste (IT); CARRARO, Carlo, I-34149 Trieste (IT)
(74) Representative: Morabito, Sara

(56) References cited:
- EP-A2- 3 177 099
- WO-A1-2019/086719

## Description

### Technical background

IOT is an acronym for Internet of Things and it refers to the explosion of devices low power or not that are connected to the Internet in order to report exchange information, report almost real-time sensors position, aggregate data and gain insights from myriads of devices dispersed or located in particular region or geography which may send an unprecedented massive amount of messages that needs to be analysed with helps of AI algorithms for a number of uses including mission critical. The IoT world allowing a large collection of sensors data will be responsible to send alerts before catastrophic but now predictable events, help to perform predictive maintenance, improve efficiency in taking decisions, managing logistics and assets.

For devices communicating to application servers in the Internet, traffic needs to be securely delivered to the application servers which can run in enterprises, data centres or the public cloud. A number of platform are now available on fully managed public clouds such Amazon AWS IoT, Google Cloud IoT and Microsoft Azure IoT.

However, the problem with the above approaches can be summarised as follows.

Many IoT devices are power-limited and not chargeable (e.g. sensors). Such devices are installed and never removed, until they run out of power, which in many cases is expected to take years. For those devices, having to perform encryption, or compute digital signatures, would be expensive power-wise and should be avoided.

Further, installing credentials on devices and renewing them adds another management and deployment challenge, which can potentially become expensive from a power point of view.

Moreover, generally, performing complex protocol operations, handling timeouts and redirects can reduce the idle time of an IoT device and therefore reduce their lifetime if they belong to the category of power-limited non-chargeable devices.

The above issues call on minimising the amount of work that needs to be performed by the end device and adding more intelligence in the network to handle those cases. This might not be feasible in all scenarios. However, this invention addresses this issue within the context of a 4G and 5G mobile network. The document WO 2019/086719, 9th May 2019 (2019-05-09), discloses a method for optimizing communication for a user identified by a user identifier accessing a service in a telecommunication network.

### Summary of the invention

The invention relates to a method for creating a secure communication session between a user identified by a user identifier and an application server via a core network and a IP network external to said core network, said user accessing said core network via a radio access network, the method including the steps of:
a. providing the core network with an interworking function;
b. providing a database associating a plurality of authorized user identifiers with a plurality of security credentials approved by the application server;
c. assigning, when said user connects to said core network, an IP address to the user;
d. providing the interworking function with the IP address and the user identifier(s) of the user connected to the core network, the user requesting a communication session with the application server;
e. checking whether the user identifier(s) of the connected user to the core network is (are) present in the database among the authorized user identifiers which can request a communication session with the application server;
f. if the user identifier(s) of the connected user to the network is (are) present in the database, forming a secure connection between the application server and the interworking function using the security credential associated to the authorized user identifier of the user connected to the core network;
g. forwarding, by the interworking function, all packets from the application server addressed to the user and all the packets from the user to the application server via the secure connection.

This invention relates to an Interworking Function (IWF), also called Serving IoT Gateway (SIGW), for 4G and 5G mobile networks that can be included as an integral component of the core network.

The mobile network can be a 3G, 4G or 5G network and includes a core network, a IP network external to said core network, and a radio access network.

The interworking function (IWF) acts as gateway to enable the user connected to the mobile network to establish a secure communication session with application servers that does not necessary uses the same network stack and transport protocols as the users. Furthermore, the IWF enables a network administrator to manage said communication session.

The IWF works in transparent and explicit modes as described below. It acts on behalf of the user, for example a IoT device, to enable communication with a remote application server, such as an IoT application server, in a secure manner, while eliminating the management and deployment complexities above. Furthermore, it eliminates the power consumption issues introduced by the use of cryptographic algorithms.

The IWF terminates the connection from the user, e.g. the IoT device, connected to the core network and re-initiates it to the application server. In doing that, it secures the connection to the application server and utilises the mobile network security over the radio interface and the core network. Hence, while the connection is not secure end to end, it provides an adequate security alternative.

The meaning of ""external"" IP network relates to a network external to the core network. Preferably such an IP network is the Internet, a private corporate network or an operator's IP network. In addition, the external IP network can be the IMS itself. There is no need that the external IP network belongs to a different operator: core network and IP network, external to the core network, can belong to the same operator of a wireless communication network.

The external IP network is connected to the core network via a gateway belonging to the core network. Packets are routed from the core network to the external IP network via the gateway. Then the packets, via the gateway, are routed back into the core network from the external IP network.

The user connects to the communications system via a radio access network ("RAN"). The RAN is connected to a core network which in turn allows connection to additional networks than the external IP network, such as public switched telephone network ("PSTN"), internet, and other IP networks.

The user may be any type of device configured to operate and/or communicate in a wireless environment. By way of example, the user may be configured to transmit and/or receive wireless signals, and may include a user equipment, a mobile station, a fixed or mobile subscriber unit, a pager, a cellular telephone, a personal digital assistant ("PDA"), a Smartphone, an iPhone, a laptop, a netbook, a personal computer, a wireless sensor, consumer electronics, and other transmitter/receivers known in the art. The user can be connected to a human or also to a machine. Preferably, the user is a IoT device.

The user is identified by a user identifier, which is for example an International Mobile Subscriber Identity (IMSI) present in a Subscriber Identity Module (SIM) card, an Universal Subscriber Identity Module (USIM), Removable User Identity Module (R-UIM), a CDMA Subscriber Identity Module (CSIM), a virtual SIM and/or a given terminal serial number such as an International Mobile Equipment Identifier (IMEI) of the user. Any other user identifier can be used, as long as it uniquely identifies the user.

Preferably, the user is identified by at least two user identifiers.

Preferably, RAN includes one or more base station configured to transmit and/or receive wireless signals within a particular geographic region, which may be referred to as a cell.

According to the standard, the user requests a connection to the network via the RAN, and a default bearer is established. The way in which such a default bearer is established is according to the known art.

The user desires to connect to an application server located in the IP network.

Moreover, the network, according to known art, assigns to the user a dynamic or static IP address.

Any device connected to the mobile network may be configured with a profile in the Home Subscriber Services (HSS) function. The role of the HSS is to communicate with the network and provide authentication information of the user that connects to the network. The HSS includes therefore a database that stores information about users to help in the authorization, details of devices, as well as the user's location and service information.

The mobile network stores the identifiers of each user.

Further a database is provided, the database contains a plurality of user identifiers, and a plurality of application servers. There is an association in the database between the user identifiers and the application servers. Further, according to the invention, there is an association between the user identifiers and a plurality of security credentials approved by the application servers. In other words, given certain user identifiers (identifying a given user), this user may be associated with a list of application servers which means that the user is given authorization to access to certain services of the application server. Further, in this association, a security credential is associated to the user identifier for a specific application server. If one of the user identifiers of a user is not associated with a security credential, it means that the user is not authorized to access the application server.

Preferably, the database contains a plurality of user identifiers associated with a plurality of security credentials, the security credentials being associated to a plurality of application servers. Therefore, a user is possibly allowed to connect to a list of application servers.

Alternatively, the database does not include application servers, but only a correspondence between user identifiers and security credential. Then the application server may or not recognize or accept the security credential.

The IWF learns the profile of a connected user and from that knowledge, it knows what this user is authorised to do and which application servers it may communicate with. This knowledge is present in the above mentioned database. Furthermore, this invention introduces the idea of adding a unique security credential (e.g. a digital certificate) in the profile, for each user identified by one or more user identifier in the database. The user can be for example a IoT device. The security credential, hereafter referred to as the "certificate" for simplicity, may be issued by the user service provider or any other issuer recognised by that service provider. The certificate and relevant profile data are retrieved by the IWF to secure the connection between itself and the application server, while uniquely identifying the user to the application server. The IWF optionally adds an additional protocol layer such as MQTT, AMQP, HTTP, COAP or other messages protocols typical of the public IoT cloud applications and uses it on top of a secure transport, typically TLS/SSL.

The security credential is of course a security credential recognised and approved by the application server. The security credential is for example a machine certificate (which can be converted into an X.509 security token at runtime) or a username/password pair (which can be used to obtain a Kerberos security token) or a password, or secret key.

With the security credential, retrieved from the database, a secure connection is established between the IWF and the application server to which the user wants to communicate. The secure connection is based on the security credential which has been retrieved in the database on the basis of the user identifier(s) associated to the user which requested the connection.

The secure connection can be for example a SSL connection, SSH Tunnel, VPN, Tinc, TLS, and IPsec.

Therefore the secure connection, which is a standard secure connection according to the known art, is created between the IWF and the application server, however it is based on a security credential which depends on the user identifiers(s) of the user, as retrieved by a database.

The traffic from the application server directed to the user are forwarded through the established secure connection between IWF and application server. The traffic from the IWF is then directed to the user.

The connection between the IWF and the user is according to the 3GPP standards, therefore can be secure, for example they can be qa connection according to the Specification # 33.210 - 3GPP.

The IWF preferably works in semi-transparent, transparent or explicit mode. This relates to the discoverability of the IWF. Note that these modes can co-exist within the same IWF device. That is, it can act in multiple modes for different users.

Preferably, the method comprises:
- intercepting, by the interworking function, traffic originated from users the user identifier of which is present in the database and directed to the application server;
- terminating the connection between the user and the core network;
- forming a secure connection between the interworking function and the application server.

In this embodiment, called transparent mode, the IWF intercepts traffic originated from known users and terminates the connection, then re-initiates it to the application server. This is a similar function to the Network Address Translator (NAT). The IWF maintains a mapping between the original user's IP address and port number to the address and port number it assigns to the connection to the application server.

Preferably, the method comprises:
- providing the traffic originated from the user with the IP address of the interworking function;
- directing the traffic from the user addressed to the application server to the interworking function;
- forming a secure connection between the interworking function and the application server.

In explicit mode, the IWF acts as a visible proxy to the user. The IWF may be discovered in one of several ways.
- Using the DNS, the user can lookup the IP address of the IWF by looking for a specific "well known" domain name. E.g. IWF.MNC.org where MNC is the mobile network code in the SIM card. Other well-known domains may be reserved for this purpose.
- DHCP can be extended with a configuration parameter for the IWF. This can be done for either DHCP or DHCPv6 to support IPv6 devices.
- The IWF IP addresses can be sent as extra parameters during the user's Attach message sequence with the core network.
- The IPv6 router advertisement message could be extended with a new option that carries the IP addresses of the SIGW.

Once in explicit mode, the user can communicate directly with the IWF, which eliminates the need for the IWF to perform a NAT function.

In **semi-transparent mode,** the PGW (or UPF in 5G networks) can create a specific VRF for the IoT devices' APN, which, based on the device's profile, can tunnel the IoT device's packets directly to the SIGW. This mode is semi-transparent because the IoT device is not aware of this function occurring in the network, while the IWF does not need to intercept packets coming out of the core network as it explicitly receives the packets destined to its own addresses.

In semi-transparent mode, the PGW (or UPF) can tunnel the packets in IP, or in an upper layer protocol, e.g. HTTP.

The database containing the association between user identifiers and application servers and secure credentials can be accessed by the IWF in several different ways.

Preferably, the step of providing the interworking function with the IP address and the user identifier(s) of the user connected to the core network comprises:
- providing the interworking function with a list of user identifiers;
- querying the PGW (or UPF) to determine the corresponding IP address for a given user identifier included in the list.

Preferably, the step of providing a database including the authorized user identifiers includes:
- Storing the database in the interworking function;
- Querying the Home Subscriber Server (HSS) of the network for the list of authorized user identifiers.

In one embodiment of this invention, the IWF is configured with a list of user identifiers such as IMSI's, or IMEIs (or hardware identifiers), or user names (with associated passwords) pre-provisioned in the user, which uniquely identifies the user. The IWF can then query the PGW (or UPF) to determine the corresponding IP address for a given user identifier, such as for a given IMSI. This query can be done using existing protocols. For instance, the existing RADIUS accounting request and accounting response messages.

Preferably, the step of providing the interworking function with the IP address and the user identifier(s) of the user connected to the core network comprises:
- Providing the application server with a list of authorized device identifiers;
- providing the interworking function with the list of device identifiers;
- providing the interworking function with a conversion table from device identifier to user identifier.

In another embodiment of this invention, the IWF is provisioned with a list of authorized users, associated with a device identifier (Dev-ID) assigned and/or known by the application server that is meant to communicate with said authorized user. In order to associate said Dev-ID to a real user, e.g., to a real IoT device, and consequently to the credentials used to establish the secure communication between said user and the application server, different methods can be used, including: i) a provisioning graphical user interface (GUI) exposed by the IWF to a human operator, for instance a web portal, ii) a configuration file uploaded onto the IWF, iii) an Application Programming Interface (API) exposed by the IWF and used by either the aforementioned Application server or another one.

It is assumed an IoT Service administrator has access to an IoT Service platform, either owned by the administrator itself or from a third party, to which both the users, e.g. IoT devices, and the application servers, e.g. IoT applications, are meant to connect, in order to establish the communication. It is also assumed that the IoT Service administrator has knowledge of the Dev-IDs to be used for each user that belongs to the IoT Service. The provisioning method above may allow to input into the IWF, for each intended user, e.g. IoT device, the corresponding Dev-ID, along with at least one or a combination of the following parameters: the IoT device's IMEI, the IMSI associated to the SIM card used by the IoT Device and the Integrated Circuit Card ID (ICCID) of said SIM card. Optionally, the credentials/certificate to be used to secure the communication can be inputted as well. Depending on the parameters used as input to the provisioning system, different procedures apply.

Preferably, the method includes the step of:
- if the user identifier(s) of the connected user is (are) not present in the database, associating to the user identifier a preliminary security credential not associated with any other user identifier;
- creating a secure connection to the application server using the preliminary security credential;
- authenticating the user identifier at the application server;
- if the application server authenticates the user identifier, updating the database with the authenticated user identifier and the preliminary security credential.

The database can be dynamic. In case the database does not associate the user identifiers owned by a certain user with a security credential, the IWF can assign a "preliminary" security credential to the user identifier and creates a secure connection to the application server on the basis of the preliminary security credential. If the application server authenticates the user identifier, for example because the application server includes a list of authorized users having certain user identifiers, then the preliminary security credential becomes a standard security credential and the database is updated including the user identifier and the former "preliminary" security credential.

Preferably, wherein the interworking function includes a forwarding table for the forwarding of packets from the user to the application server and vice versa.

### Description of the drawings

The invention will be better detailed with reference to the appended drawings, where:
Figure 1 is a schematic drawing of a prior art IOT communication to standard Public IOT Cloud;
Figure 2 is a schematic drawing of a serving IoT gateway (SIGW) connecting 4G/5G mobile networks to the IoT Core and application clouds according to the invention;
Figure 3 is a different embodiment of the serving IoT gateway (SIGW) connecting 4G/5G mobile networks to the IoT Core and application clouds according to the invention;
Figure 4 is a further different embodiment of the serving IoT gateway (SIGW) according to the invention;
Figure 5 is a diagram showing SIGW packet forwarding from user (device) to IoT application;
Figure 6 is a diagram showing a step of the method of the invention;
Figure 7 is a diagram showing SIGW packet forwarding from IoT application to the device;
Figure 8 is a diagram showing a different embodiment of the packet forwarding of figure 7;
Figure 9 is a diagram showing another step of the method of the invention;
Figure 10 shows some of the steps of the method of the invention.

### Detailed embodiments of the invention

### Acronyms

- API: Application Programming Interface
- EPC: Evolved Packet Core
- HSS: Home Subscriber Service
- IoT: Internet of Things
- LTE: Long Term Evolution
- MNO: Mobile Network Operator
- P-GW: Packet Data Network Gateway
- QoS: Quality of Service
- RAN: Radio Access Network
- SMF nomenclature): Session Management Function (5G
- UPF: User Plane Function (5G nomenclature)

A mobile network 100 includes a core network 101, a radio access network 102 and an IP network 103.

A user 1 can connect to the IP network 103 and uses the resources therein available, such as an application server 104, from which several applications 105 can be accessed. The user 1 connects to the IP network 103 via the radio access network 102 and the core network 101.

For example, part of the IP network 103 can be a cloud. "The cloud" refers to servers that are accessed over the Internet, and the software and databases that run on those servers. The cloud may include a cloud IoT core and applications, for example a Microsoft IoT core or a Google IoT core.

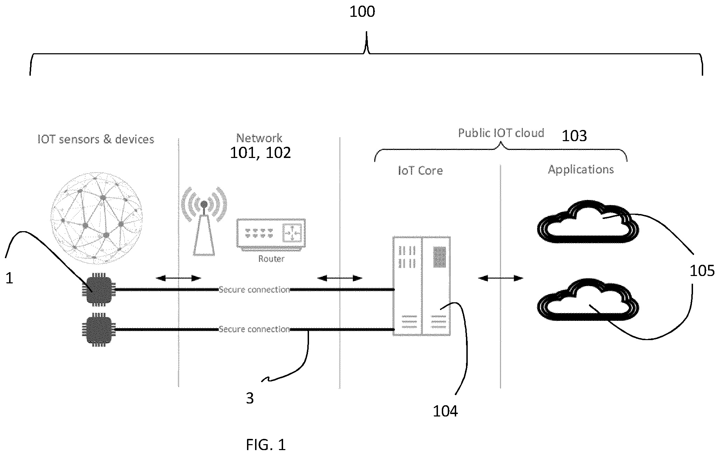

Figure 1 shows a secure connection 3 between user 1 IoT sensors and devices) and application server 104 according to the prior art. The secure connection 3 is formed according to any known standard.

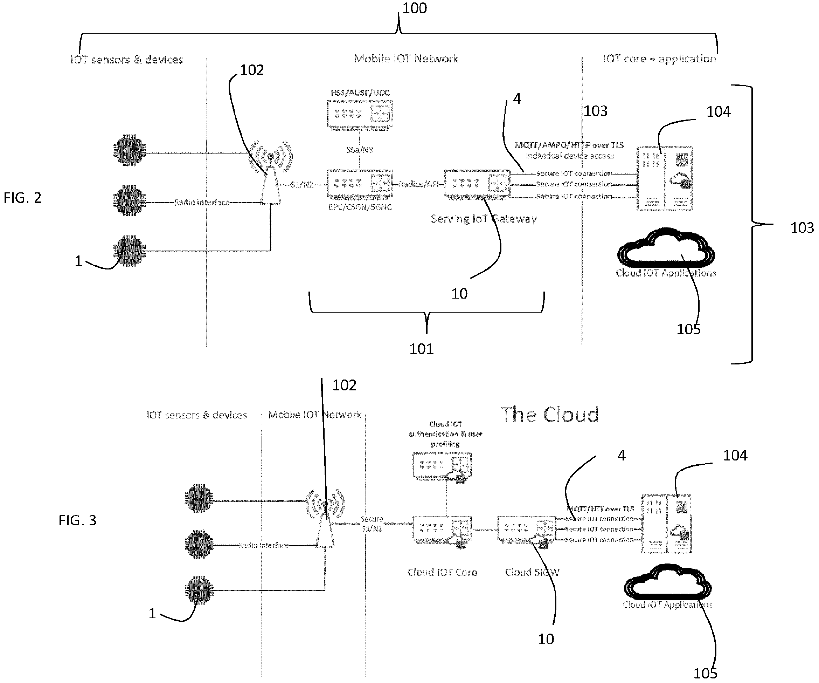

Figure 2 shows a secure connection 4 formed according to the present invention. The core network 101 of the mobile network 100 includes a serving IoT gateway (SIGW) 10 as interworking function (IWF) connecting 4G/5G mobile core networks 101 to the IP network 103, e.g. application server 104 such as IoT Core and application clouds 105. The SIGW 10 is responsible of establishing the secure connections 4 towards the Core IoT and relieves the users 1 from the task of establishing a secure (such as TLS) connection using a certificate which may not be possible for low cost, low power, simple stack devices like the one used for sensors. A single Secure TLS connection 4 from the SIGW 10 to the IOT Core 104 can optionally be used to map the traffic flow of multiple devices.

Figure 3 shows a mobile IoT implementation in the Cloud. This figure is an alternative implementation of what is shown in figure 2, where everything is in the cloud.

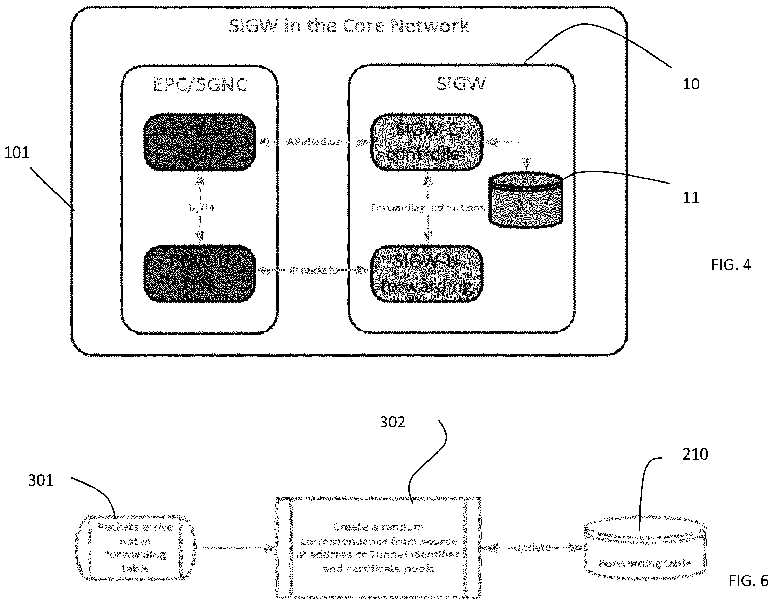

Figure 4 shows another possible implementation where the SIGW 10 is part of the core network 101 and it is optionally embedded into the PGW of the core network 101. In this specific embodiment, the SIGW 10 is broken into SIGW controller (SIGW-C) and forwarding (SIGW-U) and the SIGW-C is implemented into the PGW-C or SMF and the SIGW-U is implemented into the PGW-U or UPF.

In all embodiments, the SIGW 10 has access to a database 11, for example depicted in figure 4.

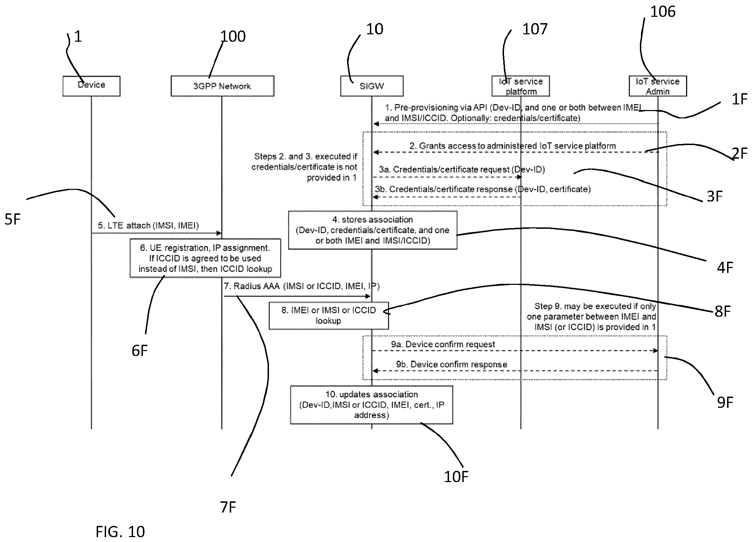

The above architecture function according to the method of the invention depicted in figure 10. In this picture the user 1 is called device. The mobile network 100 is a 3GPP network. The phases of the method are depicted in figure 10 and described below (the numbers of the phases refer to the corresponding numbers in figure 10).

Preferably, user 1 is a IoT device.

A IoT Service Administrator 106 gives appropriate access to Internet of Things (IoT) devices 1, in particular access to IoT applications, example of application server 104.

The network 100 includes a SIGW 10.

In the first step 1F, the IoT Service administrator 106 uses a SIGW's provisioning tool (e.g., the API-based one), not shown in the drawings, to input a Dev-ID, and a user identifier identifying the user 1, for example either one or both between the IMEI and the IMSI. The 3GPP network operator and the SIGW administrator (which can be the same entity) can agree to use the SIM card's ICCID instead of the IMSI. If the device's security credentials (e.g. a X.509 certificate) are inputted as well in the SIGW, then skip to step 4F. In this way, a database 11 is formed in the SIGW.

If the security credentials for the user 1 (IoT device) are not imputed, then in step 2F, the IoT Service administrator grants the SIGW 10 access to the IoT Service Platform 107 where application server 104 is present. The method used for this operation is out of scope of the present invention. This step can be skipped if the IoT Application fetches the user's security credentials and passes them on to the SIGW (note that only the IoT Service Platform's URI needs to be known to the SIGW, in order for the system to work properly).

In step 3F, the SIGW 10 requests the creation of the user's security credentials (e.g. a X.509 certificate) to the IoT Service platform 107 and fetches them. This step can be skipped if the IoT Application fetches the device's credentials and passes them on to the SIGW.

In step 4F, the SIGW 10 stores the association between the Dev-ID, the security credentials and the user identifier(s) conveyed in step 1F.

In step 5F, a standard attach, for example a LTE attach, is requested by the user 1. Upon network attach, the user, e.g. IoT device, sends its user identifiers, e.g. IMSI and IMEI pair to the mobile network 100 functions as part of the 3GPP standard network procedures.

In step 6F, the 3GPP network 100 triggers the necessary procedures for registering the user 1 in the network, and eventually assigns an IP address to it. If the system devises the use of the ICCID parameter, then an ICCID lookup is performed based on the information sent by the device during the attach procedure. The details of the ICCID lookup procedure are out of the scope of the present invention.

In step 7F, the 3GPP network sends the IP address along with the user's identifiers, e.g. IoT device's IMEI and IMSI, to the SIGW 10. The ICCID is passed instead of the IMSI if the 3GPP network and the SIGW are configured so.

In step 8F, the SIGW 10 checks that the received user identifiers, e.g. IMEI and/or IMSI (ICCID), is (are) registered in its database 11 as a result of step 1F. If both IMEI and IMSI (ICCID) are present, then the procedure skips to step 10F. If one user identifier only is stored, either the IMEI or the IMSI (ICCID), then the additional step 9F may be optionally executed. If no parameter is present, the IoT device registration is rejected.

In step 9F, optional, the SIGW 10 requests the IoT Service administrator 106to validate the IoT Device's registration. This can be achieved by sending an explicit request message to an IoT Service administrator-owned application, or by requesting the IoT Service administrator to press a "confirm button" on the GUI-based provisioning portal.

In step 10F, the SIGW 10 finalizes the user registration, storing the Dev-ID, the IMEI, the IMSI (ICCID), the security credentials/certificate and the IP address associated to the user 1.

From the procedure above, an IoT application 104 can manage an IoT device 1 identified by its Dev-ID, and the SIGW 10 can forward the traffic to/from an IoT device 1 to/from the IoT application 104, making sure that the IoT application can distinguish the IoT device 1 associated to given traffic flows.

In another embodiment of this invention, not shown in the drawings, the SIGW 10 can query the HSS for a list of IMSI's for users (IoT devices) 1. The key of such query can be a predefined field in the profile provisioned for a given subscriber (identifying a user). The SIGW 10 can use the same messages to the PGW/UPF to retrieve the corresponding IP addresses.

In another embodiment of this invention, the SIGW 10 can be incorporated as part of the PGW/UPF function, which enables it to avoid sending any messages for retrieval of IP addresses of the users 1, which are locally known.

The SIGW 10 may also be configured either manually or through the retrieval of the HSS profile, of a given IoT application server destination address for a user 1 (IoT device). This allows the SIGW to implement forwarding policies for users (IoT devices) that do not have IP connectivity. For instance, a user 1 (IoT device) using the NB-IoT standard may be sending non-IP data which is transported directly over the radio interface signalling. Such data can be sent directly to the SIGW 10, while incorporating the user identifier or the IMSI. The SIGW 10 uses this information to construct an IP packet and send it to the appropriate IoT application server 104.

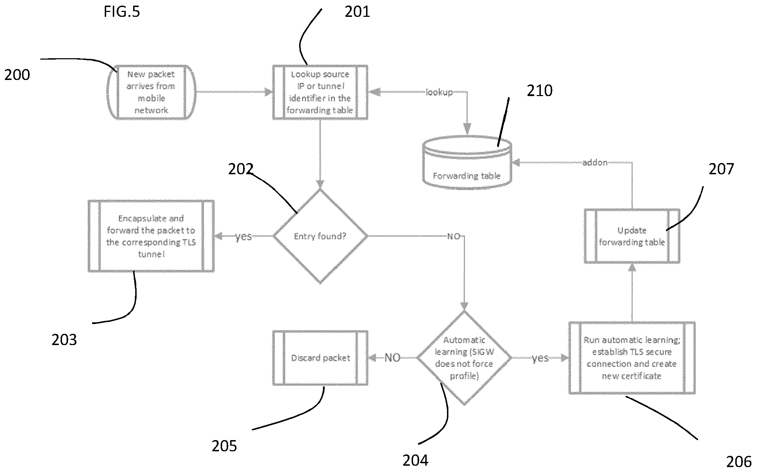

Figure 5 shows SIGW packet forwarding from user 1 to IoT application 104. In this case the TLS connection has been already formed and the user 1 has been already identified. Thus the SIGW has formed a forwarding table 210 for the packets coming from that user 1 and directed to the application server 104 so that the packets can be forwarded through the secure connection.

In step 200 a new packet arrives in the core network 101. The SIGW checks in step 201 whether the source IP or the tunnel identifier of the packet is stored in the forwarding table.

If the source IP or tunnel identifier is indeed in the forwarding table 210 (step 202), then the packet is encapsulated and forwarded in the corresponding TLS tunnel (step 203).

In case there is no such a entry in the forwarding table 210, then the packet may be discarded in step 205.

However, as part of the invention, an automatic learning mechanism is present, that allows to open a TLS tunnel certificate based unique for each IoT device 1, although the association user identity / certificate has not been pre-provisioned in the SIGW database 11 or external databases such as SPR or HSS database. The packet when forwarded to the application server is encapsulated in MQTT or HTTP or other protocols over a secure protocol (e.g. TLS) (steps 204, 206).

SIGW 10 may enable an automatic learning mechanism which acts just like a NAT and maps unique IP addresses or Tunnel id belonging to different users 1 to different and unique certificates (security credentials). The correspondence, when the automatic learning is used, is valid as long as the IP address or tunnel id does not change.

The forwarding table 210 is thus updated in step 207.

This step is better detailed in figure 6, where, when there is no entry in the forwarding table 210 of the IP source or tunnel identifier (step 301), a random association is performed between the IP source address/tunnel identifier and a security certificate (step 302) and the forwarding table 210 is consequently updated. In this case the user identity verification is left to the application server 104.

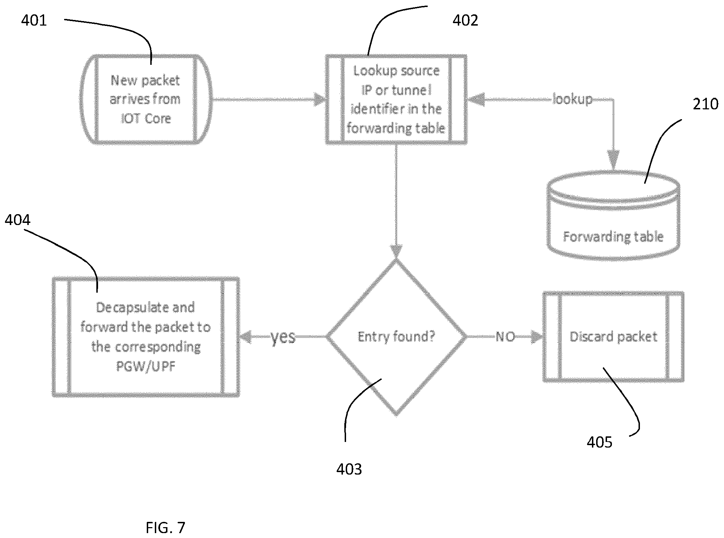

In figure 7, the SIGW packet forwarding from IoT application 104 to the user 1 is shown. In step 401 a new packet arrives from the application server 104. The SIGW checks in step 402 whether the source IP or the tunnel identifier of the packet is stored in the forwarding table 210.

If the source IP or tunnel identifier is indeed in the forwarding table 210 (step 403), then the TLS tunnel is terminated, packet de-capsulated and forwarded to the PGW or UPF (step 404).

In case there is no such a entry in the forwarding table 210, then the packet may be discarded in step 405.

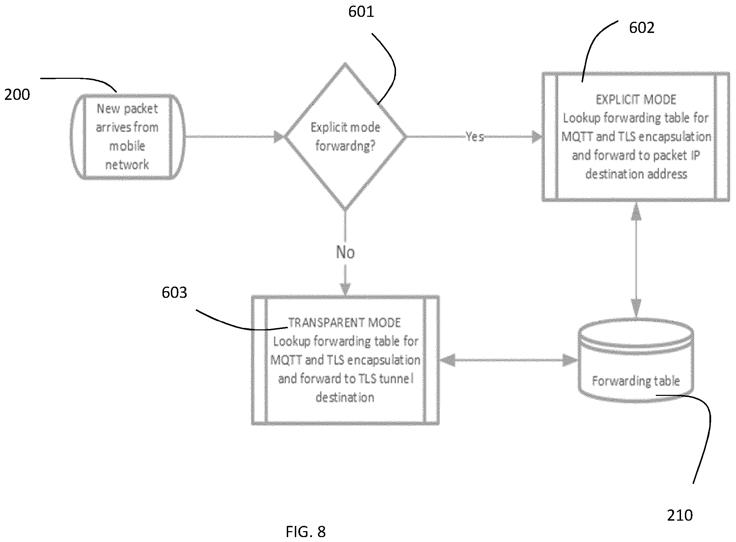

Figure 8 shows that the SIGW 10 may have either a transparent or explicit forwarding mode. In step 200 a new packet arrives in the core network 101. The SIGW checks in step 601 whether the forwarding mode is either explicit (step 602) or transparent (step 603) and acts accordingly.

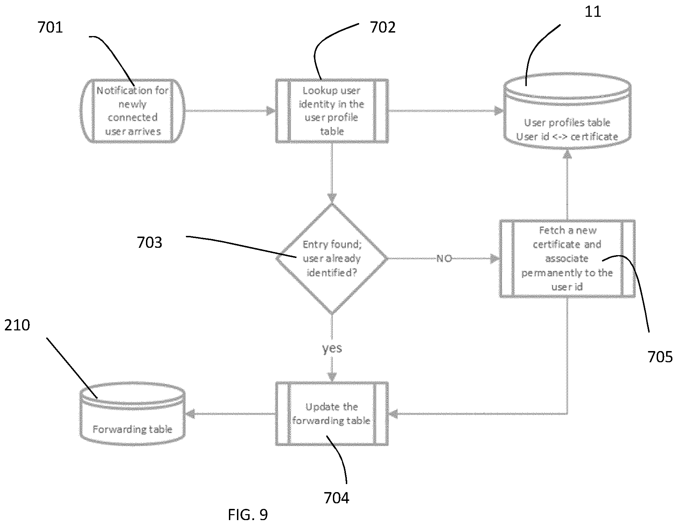

Figure 9 shows the phases of the method when another user 1 is associated (step 701). The SIGW 10 checks its database 11 checking whether the user identifiers of the new user are present. SIGW 10 populates the forwarding table and associates the user identity with certificates. The certificates may be pre-defined in the user profiles (HSS) or provisioned internally into the SIGW. The policy is contained in the user profile which associate to a user a certificates validated with the IoT Core platform. At the end of the process, the forwarding table is always updated. The notification of a newly connected users (step 701) and its association with tunnel identifier or IP address may be provided in several mode such as the Radius accounting messages largely available in the PGW and/or SMF 5G equivalent.

So if the user is already found in the database 11 and identified, that is, a certificate is also present (step 703), the forwarding table 210 is updated (step 704) with these new information.

If the user is not identified yet, then the database 11 can be updated, for example fetching a new security certificate and associating it to the user identifier (step 705).

## Claims

1. A method for creating a secure communication session between a user identified by a user identifier and an application server via a core network and a IP network external to said core network, said user accessing said core network via a radio access network, the method including the steps of:
• providing the core network with an interworking function;
• providing a database associating a plurality of authorized user identifiers with a plurality of security credentials approved by the application server;
• assigning, when said user connects to said core network, an IP address to the user;
• providing the interworking function with the IP address and the user identifier(s) of the user connected to the core network, the user requesting a communication session with the application server;
• checking whether the user identifier(s) of the connected user to the core network is (are) present in the database among the authorized user identifiers which can request a communication session with the application server;
• if the user identifier(s) of the connected user to the network is (are) present in the database, forming a secure connection between the application server and the interworking function using the security credential associated to the authorized user identifier of the user connected to the core network;
• forwarding, by the interworking function, all packets from the application server addressed to the user and all the packets from the user to the application server via the secure connection.

2. The method according to claim 1, including the step of:
• if the user identifier of the connected user is not present in the database, associating to the user identifier a preliminary security credential not associated with any other user identifier;
• creating a secure connection to the application server using the preliminary security credential;
• authenticating the user identifier at the application server;
• if the application server authenticate the user identifier, updating the database with the authenticated user identifier and the preliminary security credential.

3. The method according to claim 1 or 2, wherein the secure connection is a TLS connection.

4. The method according to any of the preceding claims, wherein the interworking function includes a forwarding table for the forwarding of packets from the user to the application network and vice versa.

5. The method according to any of the preceding claims, wherein the user identifier is one of: the user's IMEI, the IMSI associated to the SIM card used by the user and the Integrated Circuit Card ID (ICCID) of said SIM card.

6. The method according to any of the preceding claims, wherein the step of providing a database including the authorized user identifiers includes:
• storing the database in the serving gateway;
• querying the Home Subscriber Server(HSS) of the network for the list of authorized user identifiers.

7. The method according to any of the preceding claims including:
• providing in the database a list of application servers accessible for each authorized user identifier;
• forming a secure connection between the interworking function and the application server only if the user requesting the connection is authorized to access the application server according to the database.

8. The method according to any of the preceding claims, wherein the user is identified by at least two user identifiers.

9. The method according to any of the preceding claims, comprising:
• intercepting, by the interworking function, traffic originated from users the user identifier of which is present in the database and directed to the application server;
• terminating the connection between the user and the core network;
• forming a secure connection between the interworking function and the application server.

10. The method according to any of the preceding claims, comprising:
• providing the traffic originated from the user with the IP address of the interworking function;
• directing the traffic from the user addressed to the application server to the interworking function;
• forming a secure connection between the interworking function and the application server.

11. The method according to any of the preceding claims, wherein the step of providing the interworking function with the IP address and the user identifier(s) of the user connected to the core network comprises:
• providing the interworking function with a list of user identifiers;
• querying the PGW or the UPF to determine the corresponding IP address for a given user identifier included in the list.

12. The method according to any of the preceding claims, wherein the step of providing the interworking function with the IP address and the user identifier(s) of the user connected to the core network comprises:
• providing the application server with a list of authorized device identifiers;
• providing the interworking function with the list of device identifiers;
• providing the interworking function with a conversion table from device identifier to user identifier.

## Patentansprüche

1. Verfahren zum Erzeugen einer sicheren Kommunikationssitzung zwischen einem durch eine Benutzerkennung identifizierten Benutzer und einem Anwendungsserver über ein Kernnetzwerk und ein IP-Netzwerk außerhalb des Kernnetzwerks, wobei der Benutzer über ein Funkzugangsnetzwerk auf das Kernnetzwerk zugreift, wobei das Verfahren folgende Schritte umfasst:
• Bereitstellen einer Interworking-Funktion für das Kernnetzwerk;
• Bereitstellen einer Datenbank, die eine Vielzahl von autorisierten Benutzerkennungen einer Vielzahl vom Anwendungsserver genehmigten Sicherheitsanmeldeinformationen zuordnet;
• Zuweisen einer IP-Adresse an den Benutzer, wenn sich der Benutzer mit dem Kernnetzwerk verbindet;
• Versorgen der Interworking-Funktion mit der IP-Adresse und der/den Benutzerkennung(en) des mit dem Kernnetzwerk verbundenen Benutzers, wobei der Benutzer eine Kommunikationssitzung mit dem Anwendungsserver anfordert;
• Überprüfen, ob die Benutzerkennung(en) des mit dem Kernnetzwerk verbundenen Benutzers in der Datenbank unter den autorisierten Benutzerkennungen, die eine Kommunikationssitzung mit dem Anwendungsserver anfordern können, vorhanden ist (sind);
• wenn die Benutzerkennung(en) des mit dem Netzwerk verbundenen Benutzers in der Datenbank vorhanden ist (sind), Herstellen einer sicheren Verbindung zwischen dem Anwendungsserver und der Interworking-Funktion unter Verwendung der Sicherheitsanmeldeinformation, die der autorisierten Benutzerkennung des mit dem Kernnetzwerk verbundenen Benutzers zugeordnet ist;
• Weiterleiten aller Pakete vom Anwendungsserver, die an den Benutzer adressiert sind, und aller Pakete vom Benutzer an den Anwendungsserver über die sichere Verbindung durch die Interworking-Funktion.

2. Verfahren nach Anspruch 1, das folgende Schritte umfasst:
• wenn die Benutzerkennung des verbundenen Benutzers nicht in der Datenbank vorhanden ist, Zuordnen einer vorläufigen Sicherheitsanmeldeinformation zu der Benutzerkennung, der keiner anderen Benutzerkennung zugeordnet ist;
• Herstellen einer sicheren Verbindung zum Anwendungsserver unter Verwendung der vorläufigen Sicherheitsanmeldeinformation;
• Authentifizieren der Benutzerkennung beim Anwendungsserver;
• wenn der Anwendungsserver die Benutzerkennung authentifiziert, Aktualisieren der Datenbank mit der authentifizierten Benutzerkennung und der vorläufigen Sicherheitsanmeldeinformation.

3. Verfahren nach Anspruch 1 oder 2, wobei die sichere Verbindung eine TLS-Verbindung ist.

4. Verfahren nach einem der vorhergehenden Ansprüche, wobei die Interworking-Funktion eine Weiterleitungstabelle zur Weiterleitung von Paketen vom Benutzer zum Anwendungsnetzwerk und umgekehrt umfasst.

5. Verfahren nach einem der vorhergehenden Ansprüche, wobei die Benutzerkennung eine der folgenden ist: die IMEI des Benutzers, die IMSI, die der vom Benutzer verwendeten SIM-Karte zugeordnet ist, und die Integrated Circuit Card ID (ICCID) der SIM-Karte.

6. Verfahren nach einem der vorhergehenden Ansprüche, wobei der Schritt des Bereitstellens einer Datenbank mit den autorisierten Benutzerkennungen Folgendes umfasst:
• Speichern der Datenbank im Serving-Gateway;
• Abfragen des Home Subscriber Server (HSS) des Netzwerks nach der Liste der autorisierten Benutzerkennungen.

7. Verfahren nach einem der vorhergehenden Ansprüche, umfassend:
• Bereitstellen einer Liste von Anwendungsservern in der Datenbank, die für jede autorisierte Benutzerkennung zugänglich sind;
• Herstellen einer sicheren Verbindung zwischen der Interworking-Funktion und dem Anwendungsserver nur dann, wenn der Benutzer, der die Verbindung anfordert, gemäß der Datenbank zum Zugriff auf den Anwendungsserver autorisiert ist.

8. Verfahren nach einem der vorhergehenden Ansprüche, wobei der Benutzer durch zumindest zwei Benutzerkennungen identifiziert wird.

9. Verfahren nach einem der vorangehenden Ansprüche, umfassend:
• Abfangen eines Datenverkehrs durch die Interworking-Funktion, der von Benutzern stammt, deren Benutzerkennung in der Datenbank vorhanden ist, und an den Anwendungsserver gerichtet ist;
• Beenden der Verbindung zwischen dem Benutzer und dem Kernnetzwerk;
• Herstellen einer sicheren Verbindung zwischen der Interworking-Funktion und dem Anwendungsserver.

10. Verfahren nach einem der vorhergehenden Ansprüche, umfassend:
• Versehen des vom Benutzer stammenden Datenverkehrs mit der IP-Adresse der Interworking-Funktion;
• Leiten des vom Benutzer an den Anwendungsserver adressierten Datenverkehrs an die Interworking-Funktion;
• Herstellen einer sicheren Verbindung zwischen der Interworking-Funktion und dem Anwendungsserver.

11. Verfahren nach einem der vorhergehenden Ansprüche, wobei der Schritt des Versorgens der Interworking-Funktion mit der IP-Adresse und der/den Benutzerkennung(en) des mit dem Kernnetzwerk verbundenen Benutzers umfasst:
• Versorgen der Interworking-Funktion mit einer Liste von Benutzerkennungen;
• Abfragen des PGW oder der UPF, um die entsprechende IP-Adresse für eine bestimmte in der Liste enthaltene Benutzerkennung zu ermitteln.

12. Verfahren nach einem der vorhergehenden Ansprüche, wobei der Schritt des Versorgens der Interworking-Funktion mit der IP-Adresse und der/den Benutzerkennung(en) des mit dem Kernnetzwerk verbundenen Benutzers umfasst:
• Versorgen des Anwendungsservers mit einer Liste von autorisierten Gerätekennungen;
• Versorgen der Interworking-Funktion mit der Liste der Gerätekennungen;
• Versorgen der Interworking-Funktion mit einer Umwandlungstabelle von der Gerätekennung zur Benutzerkennung.

## Revendications

1. Procédé de création d'une session de communication sécurisée entre un utilisateur, identifié par un identifiant d'utilisateur, et un serveur d'application par le biais d'un réseau central et d'un réseau IP externe audit réseau central, ledit utilisateur accédant audit réseau central par le biais d'un réseau d'accès radio, le procédé comprenant les étapes consistant à :
• fournir, au réseau central, une fonction d'interconnexion de réseaux ;
• fournir une base de données associant une pluralité d'identifiants d'utilisateur autorisé à une pluralité de justificatifs d'identité de sécurité approuvés par le serveur d'application ;
• attribuer, lorsque ledit utilisateur se connecte audit réseau central, une adresse IP à l'utilisateur ;
• fournir, à la fonction d'interconnexion de réseaux, l'adresse IP et le ou les identifiants de l'utilisateur connecté au réseau central, l'utilisateur demandant une session de communication avec le serveur d'application ;
• vérifier si le ou les identifiants d'utilisateur de l'utilisateur connecté au réseau central est/sont présents dans la base de données parmi les identifiants d'utilisateur autorisé qui permettent de demander une session de communication avec le serveur d'application ;
• si le ou les identifiants d'utilisateur de l'utilisateur connecté au réseau est/sont présents dans la base de données, établir une connexion sécurisée entre le serveur d'application et la fonction d'interconnexion de réseaux au moyen du justificatif d'identité de sécurité associé à l'identifiant d'utilisateur autorisé de l'utilisateur connecté au réseau central ;
• transférer, par la fonction d'interconnexion de réseaux, tous les paquets du serveur d'application adressés à l'utilisateur et tous les paquets de l'utilisateur au serveur d'application par le biais de la connexion sécurisée.

2. Procédé selon la revendication 1, comprenant en outre les étapes consistant à :
• si l'identifiant d'utilisateur de l'utilisateur connecté n'est pas présent dans la base de données, associer, à l'identifiant d'utilisateur, un justificatif d'identité de sécurité préalable qui n'est associé à aucun autre identifiant d'utilisateur ;
• créer une connexion sécurisée avec le serveur d'application au moyen du justificatif d'identité de sécurité préalable ;
• authentifier l'identifiant d'utilisateur au niveau du serveur d'application ;
• si le serveur d'application authentifie l'identifiant d'utilisateur, mettre à jour la base de données avec l'identifiant d'utilisateur authentifié et avec le justificatif d'identité de sécurité préalable.

3. Procédé selon la revendication 1 ou la revendication 2, dans lequel la connexion sécurisée est une connexion TLS.

4. Procédé selon l'une quelconque des revendications précédentes, dans lequel la fonction d'interconnexion de réseaux comprend une table de transfert prévue pour le transfert de paquets de l'utilisateur au réseau d'application et vice versa.

5. Procédé selon l'une quelconque des revendications précédentes, dans lequel l'identifiant d'utilisateur est un identifiant parmi : l'IMEI de l'utilisateur, l'IMSI associé à la carte SIM utilisée par l'utilisateur et l'ID de carte de circuits intégrés (ICCID) de ladite carte SIM.

6. Procédé selon l'une quelconque des revendications précédentes, dans lequel l'étape d'utilisation d'une base de données comprenant les identifiants d'utilisateur autorisé consiste à :
• mémoriser la base de données dans la passerelle de desserte ;
• interroger le serveur domestique d'abonnés (HSS, pour *Home Subscriber Server)* du réseau en ce qui concerne la liste d'identifiants d'utilisateur autorisé.

7. Procédé selon l'une quelconque des revendications précédentes, comprenant les étapes consistant à :
• mettre, dans la base de données, une liste de serveurs d'application accessibles pour chaque identifiant d'utilisateur autorisé ;
• établir une connexion sécurisée entre la fonction d'interconnexion de réseaux et le serveur d'application uniquement si l'utilisateur demandant la connexion est autorisé à accéder au serveur d'application conformément à la base de données.

8. Procédé selon l'une quelconque des revendications précédentes, dans lequel l'utilisateur est identifié par au moins deux identifiants d'utilisateur.

9. Procédé selon l'une quelconque des revendications précédentes, comprenant les étapes consistant à :
• intercepter, par la fonction d'interconnexion de réseaux, un trafic provenant d'utilisateurs, dont l'identifiant d'utilisateur est présent dans la base de données, et dirigé vers le serveur d'application ;
• mettre fin à la connexion entre l'utilisateur et le réseau central ;
• établir une connexion sécurisée entre la fonction d'interconnexion de réseaux et le serveur d'application.

10. Procédé selon l'une quelconque des revendications précédentes, comprenant les étapes consistant à :
• fournir, au trafic provenant de l'utilisateur, l'adresse IP de la fonction d'interconnexion de réseaux ;
• diriger le trafic de l'utilisateur adressé au serveur d'application vers la fonction d'interconnexion de réseaux ;
• établir une connexion sécurisée entre la fonction d'interconnexion de réseaux et le serveur d'application.

11. Procédé selon l'une quelconque des revendications précédentes, dans lequel l'étape de fourniture, à la fonction d'interconnexion de réseaux, de l'adresse IP et du ou des identifiants d'utilisateur de l'utilisateur connecté au réseau central consiste à :
• fournir, à la fonction d'interconnexion de réseaux, une liste d'identifiants d'utilisateur ;
• interroger la PGW ou la UPF pour déterminer l'adresse IP correspondante d'un identifiant d'utilisateur donné compris dans la liste.

12. Procédé selon l'une quelconque des revendications précédentes, dans lequel l'étape de fourniture, à la fonction d'interconnexion de réseaux, de l'adresse IP et du ou des identifiants d'utilisateur de l'utilisateur connecté au réseau central consiste à :
• fournir, au serveur d'application, une liste d'identifiants de dispositif autorisé ;
• fournir, à la fonction d'interconnexion de réseaux, la liste d'identifiants de dispositif ;
• fournir, à la fonction d'interconnexion de réseaux, une table de conversion d'identifiant de dispositif en identifiant d'utilisateur.
